# EUROPEAN PATENT APPLICATION

(11) **EP 3 438 808 A1**
(43) Date of publication of application: **06.02.2019**
(21) Application number: 16788403.0
(22) Date of filing: 25.08.2016
(51) Int. Cl.: G06F 3/0488

(54) **SPLIT-SCREEN DISPLAYING METHOD AND APPARATUS, AND ELECTRONIC DEVICE**

(30) Priority: 28.03.2016 CN 201610182740
(71) Applicant: LE Holdings (Beijing) Co., Ltd., Beijing 100025 (CN); Lemobile Information Technology (Beijing) Co., Ltd., Beijing 101300 (CN)
(72) Inventor: LI, Zhicheng, Beijing 101300 (CN)
(74) Representative: Lavoix
(86) International application number: PCT/CN2016/096632
(87) International publication number: WO 2017/166621

(57) **Abstract**

The present disclosure provides a split screen display method, apparatus and electronic device, wherein the method includes: detecting a screen splitting trigger operation; acquiring the number of multiple applications currently running in the background according to the screen splitting trigger operation; dividing a screen into multiple split screen display areas according to the number of multiple applications; wherein the number of multiple split screen display areas is more than or equal to the number of multiple applications; and displaying running interfaces corresponding to multiple applications respectively in multiple split screen display areas. The present disclosure solves the low operating efficiency problem of split screen display application of a mobile terminal in the prior art, achieves rapid screen splitting of a mobile terminal and display of running interfaces of applications running in the background, and effectively improves the operating efficiency of split screen displayof applications on a mobile terminal.

## Description

### CROSS REFERENCE

This application is based upon and claims priority to Chinese Patent Application No. 201610182740.0 filed on March 28, 2016 and titled "SPLIT SCREEN DISPLAY METHOD AND APPARATUS", the entire content of which is incorporated herein by reference.

### TECHNICAL FIELD

The present disclosure relates to the technical field of communication, in particular to a split screen display method, apparatus, and electronic device.

### BACKGROUND

As smart phones, tablet computers and other terminals increasingly tend to develop into large screen, the increase of screen size has greatly enhanced the user experience of the terminals on respects of reading, web browsing, video play, etc. With the increasing improvement of hardware configuration, smart phones, tablet computers and other terminals have more and more functions and their screens become larger and larger. With the enhancement of their functions, users have increasingly higher demand for simultaneous operation of multiple applications. At present, if an application is running in a terminal, but at the same time another application also need to be run at the terminal for operation by a user, the terminal needs to suspend relevant operations of the currently running application, or turn off the application interface of the currently running application, so as to switch to the application interface of another application. For example, if a user needs to chat with friends when watching a video, the userl needs to temporarily close the currently playing video first and then switch to the chatting interface. Therefore, if a user needs to carry out operations to simultaneously display multiple applications, the user has to switch between application interfaces of various applications repeatedly, thereby bringing inconvenience for user's operations.

At present, some mobile terminals have developed relevant functions, e.g. the multi-window function of Samsung S5 mobile phone terminal, in view of the problem of multi-window display on one screen, by first guiding the system into a screen splitting mode to divide a screen, then adding applications to be run and displayed in the divided split screen areas, and finally confirming the completion of the operation. The above screen splitting method has complex steps, needs to divide a screen according to user's needs, then open the applications list, and add the list to the split screen areas, and further needs to carry out the operations such as application adding again when applications displayed in the split screen areas need to be changed. This split screen display method involves complex operations, thereby resulting in low usage rate.

In view of the low operating efficiency problem of split screen displayof applications on a mobile terminal in the prior art, an effective solution has not been presented yet.

### SUMMARY

The present disclosure provides a split screen display method, apparatus and electronic device, so as to at least solve the low operating efficiency problem of split screen display of applications on a mobile terminal in the prior art.

One objective of the embodiments of the present disclosure is to provide a split screen display method that comprises: detecting a screen splitting; acquiring the number of multiple applications currently running in the background according to the screen splitting operation; dividing a screen into multiple split screen display areas according to the number of the multiple applications, wherein the number of the multiple split screen display areas is more than or equal to the number of the multiple applications; and displaying running interfaces corresponding to the multiple applications respectively in the multiple split screen display areas.

Optionally, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

Optionally, after displaying running interfaces corresponding to the multiple applications respectively in the multiple split screen display areas, the method further comprises: automatically hiding running interfaces of specified applications of the multiple applications and running them in the background when detecting that the specified applications are not operated beyond a preset time.

Optionally, after displaying running interfaces corresponding to the multiple applications respectively in the multiple split screen display areas, the method further comprises: receiving an instruction for exchanging a first split screen area and a second split screen area in the multiple split screen display areas; and exchanging and displaying running interfaces corresponding to the applications respectively displayed in the first split screen area and the second split screen area according to the exchange instructions.

Optionally, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

Another objective of the embodiments of the present disclosure is to provide a split screen display apparatus that comprises: a first detecting module that detects a screen splitting; an acquisition module that acquires the number of multiple applications currently running in the background according to the screen splitting operation; a screen splitting module that divides a screen into multiple split screen display areas according to the number of the multiple applications, wherein the number of the multiple split screen display areas is more than or equal to the number of the multiple applications; and a display module that displays running interfaces corresponding to the multiple applications respectively in the multiple split screen display areas.

Optionally, the display module comprises: an acquisition unit that acquires the sequence that the multiple applications are selected respectively or the priority respectively corresponding to the multiple applications; a display unit that displays running interfaces corresponding to the multiple applications respectively in the multiple split screen display areas in the sequence that the multiple applications are respectively selected or according to the priority respectively corresponding to the multiple applications.

Optionally, the apparatus further comprises a second detecting module that, after displaying running interfaces corresponding to the multiple applications respectively in the multiple split screen display areas, detects that the specified applications are not operated beyond a preset time, and then automatically hides running interfaces of specified applications of the multiple applications and runs them in the background.

Optionally, the apparatus further comprises: a receiving module that receives an instruction for exchanging a first split screen area and a second split screen area in the multiple split screen display areas; and an exchanging module that exchanges and displays running interfaces corresponding to the applications respectively displayed in the first split screen area and the second split screen area according to the exchange instructions.

Optionally, the receiving module receives a preset sliding operation of a user to a display interface of a mobile terminal; or receives a user's operation to a preset physical button of a mobile terminal.

A further objective of the embodiments of the present disclosure is to provide an electronic device that comprises at least one processor; and a memory communicably connected with the at least one processor for storing instructions executable by the at least one processor, wherein execution of the instructions by the at least one processor causes the at least one processor to detect a screen splitting; acquire the number of multiple applications currently running in the background according to the screen splitting operation; divide a screen into multiple split screen display areas according to the number of the multiple applications, wherein the number of the multiple split screen display areas is more than or equal to the number of the multiple applications; and display running interfaces corresponding to the multiple applications respectively in the multiple split screen display areas.

In the aforementioned electronic device, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

In the aforementioned electronic device, after displaying running interfaces corresponding to the multiple applications respectively in the multiple split screen display areas, the at least one processor is further caused to detect that the specified applications are not operated beyond a preset time, and then automatically hide running interfaces of specified applications of the multiple applications and run them in the background.

In the aforementioned electronic device, after displaying running interfaces corresponding to the multiple applications respectively in the multiple split screen display areas, the at least one processor is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

In the aforementioned electronic device, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

A further objective of the embodiments of the present disclosure is to provide a non-transitory computer-readable storage medium storing executable instructions that, when executed by an electronic device, cause the electronic device to detect a screen splitting; acquire the number of multiple applications currently running in the background according to the screen splitting operation; divide a screen into multiple split screen display areas according to the number of the multiple applications, wherein the number of the multiple split screen display areas is more than or equal to the number of the multiple applications; and display running interfaces corresponding to the multiple applications respectively in the multiple split screen display areas.

In the aforementioned non-transitory computer-readable storage medium, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

In the aforementioned non-transitory computer-readable storage medium, after displaying running interfaces corresponding to the multiple applications respectively in the multiple split screen display areas, the electronic device is further caused to detect that the specified applications are not operated beyond a preset time, and then automatically hide running interfaces of specified applications of the multiple applications and run them in the background.

In the aforementioned non-transitory computer-readable storage medium, after displaying running interfaces corresponding to the multiple applications respectively in the multiple split screen display areas, the electronic device is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

In the aforementioned non-transitory computer-readable storage medium, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

The present disclosure is implemented by detecting a screen splitting trigger application; acquiring the number of multiple applications currently running in the background according to the screen splitting trigger operation; dividing a screen into multiple split screen display areas according to the number of multiple application, wherein the number of multiple split screen display areas is more than or equal to the number of multiple applications; and displaying running interfaces corresponding to multiple applications respectively in multiple split screen display areas. The present disclosure solves the low operating efficiency problem of split screen display of applications on a mobile terminal in the prior art, achieves rapid screen splitting of a mobile terminal and display of running interfaces of applications running in the background, and effectively improves the operating efficiency of split screen display of applications on a mobile terminal.

### BRIEF DESCRIPTION OF THE DRAWINGS

In order to more clearly describe the technical solutions in the specific embodiments of the present disclosure or in the prior art, hereinafter, the accompanying drawings required to be used in the description of the specific embodiments or the prior art will be briefly introduced. Apparently, the accompanying drawings described below are only directed to some embodiments of the present disclosure, and for those skilled in the art, without expenditure of creative labor, other drawings can be derived on the basis of these accompanying drawings.
Figure 1 is a flow chart of a split screen display method according to the embodiments of the present disclosure;
Figure 2 is a structure diagram of a split screen display apparatus according to the embodiments of the present disclosure;
Figure 3 is a structure diagram of a display module according to the embodiments of the present disclosure;
Figure 4 is another structure diagram of the split screen display apparatus according to the embodiments of the present disclosure;
Figure 5 is another structure diagram of the split screen display apparatus according to the embodiments of the present disclosure;
Figure 6 is a schematic diagram of the hardware structure of electronic device according to the embodiments of the present disclosure.

### DETAILED DESCRIPTION

A clear and complete description of the technical solution of the present disclosure is given below, in conjunction with the accompanying drawings. Apparently, the embodiments described below are a part, but not all, of the embodiments of the present disclosure. All of the other embodiments, obtained by those skilled in the art on the basis of the embodiments described in the present disclosure without expenditure of creative labor, fall into the protection scope of the present disclosure.

In the description of the present disclosure, it needs to be noted that, terms such as "center", "above", "below", "left", "right", "vertical", "horizontal", "inside", "outside" refer to the orientation or positional relation based on the illustration of the drawings, which is merely for facilitating and simplifying the description of the present disclosure, not for indicating or implying that the referred apparatus or component must have a particular orientation or must be configured or operated in a particular orientation, therefore is not to be construed as a limitation towards the present disclosure. In addition, terms such as "first", "second", "third" are merely for the purpose of description, and are not to be construed as an indication or implication of relative importance thereof.

In the description of the present disclosure, it needs to be noted that, unless specifically defined or restricted otherwise, terms such as "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units; they may be wireless connection or wired connection. For those skilled in the art, the specific meaning of the aforementioned terms in the present disclosure can be understood according to specific situations thereof.

Furthermore, the technical features involved in the various embodiments of the present disclosure described below can be combined with one another as long as they do not conflict with one another.

### Embodiment 1

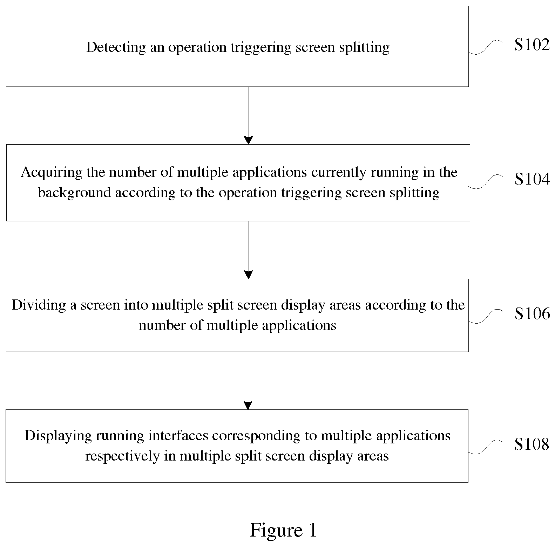

The present embodiment provides a split screen display method. Figure 1 is a flow chart of a split screen display method according to the embodiment of the present disclosure, wherein the screen splitting method of the terminal as shown in Figure 1 can be applied to smart phones (e.g. Android phone, iOS phone, etc.), tablet computers, handheld computers, mobile Internet devices (MID), personal digital assistants (PDA), media players, smart TV, smart watches, smart glasses, smart bracelets, etc. As shown in Figure 1, the process includes the following steps:
Step S102: a screen splitting trigger operation is detected;
Step S104:the number of multiple applications currently running in the background is acquired according to the screen splitting trigger operation;
Step S106: a screen is divided into multiple split screen display areas according to the number of multiple applications; wherein the number of multiple split screen display areas is more than or equal to the number of multiple applications; and
Step S108: running interfaces corresponding to multiple applications are displayed respectively in multiple split screen display areas.

Through the above steps, a screen splitting trigger operation is detected in the case that multiple applications are running in the background of a terminal, a screen is divided into multiple split screen display areas corresponding to the number of multiple applications, and then the running interfaces of multiple applications are displayed at the same time through the multiple split screen display areas. In the prior art, if a user needs to display multiple applications at the same time, the user needs to switch between the application interfaces of various applications repeatedly, thereby bringing inconvenience for the user's operation. These steps have solved the low operating efficiency problem of split screen display of applications on a mobile terminal in the prior art, achieved rapid screen splitting of a mobile terminal and display of running interfaces of applications running in the background, and effectively improved the operating efficiency of split screen display of applications on a mobile terminal.

Wherein, the number of multiple split screen display areas is more than or equal to the number of multiple applications. In the case that the number of multiple split screen display areas is equal to the number of multiple applications, multiple split screen display areas display multiple applications by one-to-one correspondence. In the case that the number of multiple split screen display areas is more than the number of multiple applications, the remaining display areas show black screens to reduce power consumption of a mobile terminal.

The above step S108 involves displaying running interfaces corresponding to multiple applications respectively in multiple split screen display areas. According to one alternative embodiment, the sequence that multiple applications are respectively selected or the priority respectively corresponding to multiple applications is acquired, and running interfaces corresponding to the multiple applications are respectively displayed in multiple split screen display areas in sequence that the multiple applications are respectively selected or according to the priority respectively corresponding to the multiple applications.

In specific implementation, after displaying the multiple split screen areas, the terminal will further acquire the sequence that the multiple applications are selected by a user, and then display running interfaces corresponding to the multiple applications respectively in the multiple split screen display areas in the sequence of being selected. For example, the running interface corresponding to the application which is selected first is displayed in a split screen area with the largest area. For another example, assuming that a user selects 4 applications, a terminal has the terminal screen displayed as 4 split screen areas arranged like a Chinese character "tian", and the 4 split screen areas are respectively named as a first split screen area, a second split screen area, a third split screen area and a fourth split screen area in sequence from the top down and from left to right, and then the terminal will display the running interface corresponding to the first selected application in the first split screen area, and display the running interface corresponding to the last selected application in the fourth split screen area. Alternatively, when a user selects multiple applications to form a stacked block, drags the block to the main screen of the terminal for screen splitting, they can be displayed in split screens in the main screen from the top down or from left to right in a sequence that multiple application icons are selected or in a stacking sequence of all applications in the stacked block. A screen splitting sequence may be changed by clicking on an application in the stacked block, and changing the stacking sequence of the application icon with the right mouse button, so as to change the split screen position of the application, which is convenient and efficient. Certainly, upon completion of screen splitting, a screen splitting sequence may also be changed by clicking on an application on a split screen, and then selecting "shift up", "shift down", "shift left" or "shift right" with the right mouse button; it may also be changed by clicking on an application the position of which is to be changed, and dragging the application to above an application on a split screen at a desired position, so that the application on the split screen below automatically jumps to the original position of the dragged application, and the position exchange is completed.

Furthermore, after displaying multiple split screen areas, a terminal can further acquire the priority of the icon of each application of multiple applications, and then display running interfaces corresponding to the multiple applications respectively in the multiple split screen areas according to the priority. For example, running interfaces corresponding to one or more application icons with the highest application priority are displayed respectively in one or more split screen areas with the largest areas. For another example, assuming that a user selects 4 application ions, a terminal displays the terminal screen as 5 split screen areas respectively named as a first split screen area, a second split screen area, a third split screen area, a fourth split screen area and a fifth split screen area in sequence from the top down and from left to right, and then the running interface corresponding to the application icon with the highest priority will be displayed in the first split screen area, the running interface corresponding to the application icon with the lowest priority among the 4 application icons will be displayed in the fourth split screen area, and no running interface will be displayed in the fifth split screen area.

According to an optional embodiment, after displaying running interfaces corresponding to multiple applications respectively in the multiple split screen display areas, running interfaces of specified applications of the multiple applications are automatically hidden and run in the background when it is detected that the specified applications are not operated beyond a preset time, thereby saving the space of the terminal screen and reducing power consumption of the terminal.

After running interfaces corresponding to multiple applications are displayed respectively in multiple split screen display areas, in an alternative embodiment, an instruction for exchanging a first split screen area and a second split screen area of the multiple split screen display areas is received, and according to the exchange instruction, the running interfaces corresponding to the applications displayed respectively in the first split screen area and the second split screen area are displayed after exchanging. In the embodiment of the present disclosure, when receiving the input instruction for exchanging the first split screen area and the second split screen area, the terminal will respond to the exchange instruction, respectively acquire the running interfaces displayed in the first split screen area and the second split screen area, and exchange and display the two running interfaces in split screen areas. That is to say, the terminal will display the running interface displayed in the first split screen area in the second split screen area, and display the running interface displayed in the second split screen area in the first split screen area. Optionally, when receiving the exchange instruction, the terminal can also exchange the positions of the first split screen area and the second split screen area to display. That is to say, the running interfaces displayed in the two split screen areas remain unchanged, and the size and shape of the two split screen areas remain unchanged, too, only the positions where the two split screen areas are displayed are changed. For example, the first split screen area is originally in the upper left area of the terminal screen, and the second split screen area is originally in the bottom left area of the terminal screen, and after receiving the exchange instruction, the first split screen area will be displayed in the bottom left area of the terminal screen, and the second split screen area will be displayed in the upper left area of the terminal screen.

According to an optional embodiment, the specific process of receiving an instruction for exchanging a first split screen area and a second split screen area of multiple split screen display areas includes: receiving a preset sliding operation of a user to a display interface of a mobile terminal, or receiving a preset operation of a user to a physical button of a mobile terminal. For example, when a user long presses a first split screen area of a terminal screen, then drags the first split screen area to above the a second split screen area by finger's sliding, and finally removes the finger from the terminal screen from above the second split screen area. Therefore, the terminal will receive an instruction for exchanging the first split screen area and the second split screen area according to the user's operation on the terminal screen, and display the running interfaces correspondingly displayed in the first split screen area and in the second split screen area after exchanging the split screen areas.

### Embodiment 2

This embodiment provides a split screen display apparatus apparatus, which is used to implement the above-mentioned embodiment and preferred embodiments. Those already described contents are not repeatedly described herein. As used below, the term "module" may refer to a combination of software and/or hardware that can achieve the predefined function. Although the apparatus described in the following embodiment is preferably implemented by software, it is also possible and conceivable that the apparatus is implemented by hardware, or a combination of software and hardware.

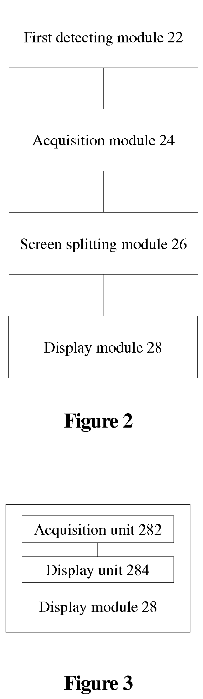

Figure 2 is a structure diagram of a split screen display apparatus according to the embodiments of the present disclosure. As shown in Figure 2, the apparatus includes: a first detecting module 22 that detects a screen splitting; an acquisition module 24 that acquires the number of multiple applications currently running in the background according to the screen splitting operation; a screen splitting module 26 that divides a screen into multiple split screen display areas according to the number of the multiple applications, wherein the number of the multiple split screen display areas is more than or equal to the number of the multiple applications; and a display module 28 that displays running interfaces corresponding to the multiple applications respectively in the multiple split screen display areas.

With the above-mentioned apparatus, a screen splitting trigger operation is detected in the case that multiple applications are running in the background of a terminal, a screen is divided into multiple split screen display areas corresponding to the number of multiple applications, and then the running interfaces of multiple applications are displayed at the same time through the multiple split screen display areas. In the prior art, if a user needs to display multiple applications at the same time, the user needs to switch between the application interfaces of various applications repeatedly, thereby bringing inconvenience for the user's operation. The above-mentioned apparatus has solved the low operating efficiency problem of split screen display of applications on a mobile terminal in the prior art, achieved rapid screen splitting of a mobile terminal and display of running interfaces of applications running in the background, and effectively improved the operating efficiency of split screen display of applications on a mobile terminal.

Figure 3 is a structure diagram of a display module according to the embodiments of the present disclosure. As shown in Figure 3, the display module 28 includes: an acquisition unit 282 that acquires the sequence that the multiple applications are selected respectively or the priority respectively corresponding to the multiple applications; a display unit 284 that displays running interfaces corresponding to the multiple applications respectively in the multiple split screen display areas in the sequence that the multiple applications are respectively selected or according to the priority respectively corresponding to the multiple applications.

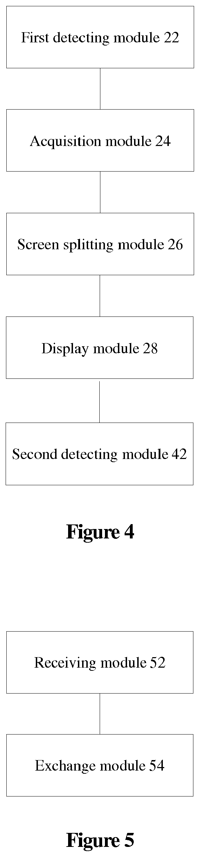

Figure 4 is another structure diagram of the split screen display apparatus according to the embodiments of the present disclosure. As shown in Figure 4, the apparatus further comprises a second detecting module 42 that, after displaying running interfaces corresponding to the multiple applications respectively in the multiple split screen display areas, detects that the specified applications are not operated beyond a preset time, and then automatically hides running interfaces of specified applications of the multiple applications and runs them in the background.

Figure 5 is another structure diagram of the split screen display apparatus according to the embodiments of the present disclosure. As shown in Figure 5, the apparatus further comprises: a receiving module 52 that receives an instruction for exchanging a first split screen area and a second split screen area in the multiple split screen display areas; and an exchanging module 54 that exchanges and displays running interfaces corresponding to the applications respectively displayed in the first split screen area and the second split screen area according to the exchange instructions.

Optionally, the receiving module 52 receives a preset sliding operation of a user to a display interface of a mobile terminal; or receives a user's operation to a preset physical button of a mobile terminal.

Further function descriptions of the above-mentioned respective modules are the same as the corresponding method embodiments above, which are not repeatedly described herein.

To sum up, with the split screen display method and apparatus provided by the present disclosure, the running interfaces corresponding to multiple applications can be displayed at the same time on the terminal screen by means of split screen of the terminal, thereby simplifying user operation for switching between multiple applications; meanwhile, when performing split screen display of multiple applications, the cumbersome operation of clicking or dragging every single application for split screen can be avoided, thereby achieving fast split screen, increasing efficiency of split screen, and thus improving user experience.

### Embodiment 3

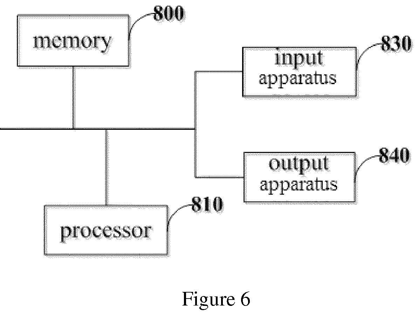

As shown in Figure 6, the embodiments of the present disclosure also disclose an electronic device that comprises at least one processor 810; and a memory 800 communicably connected with the at least one processor 810 for storing instructions executable by the at least one processor 810, wherein execution of the instructions by the at least one processor 810 causes the at least one processor 810 to detect a screen splitting; acquire the number of multiple applications currently running in the background according to the screen splitting operation; divide a screen into multiple split screen display areas according to the number of the multiple applications, wherein the number of the multiple split screen display areas is more than or equal to the number of the multiple applications; and display running interfaces corresponding to the multiple applications respectively in the multiple split screen display areas. The electronic device also includes an input apparatus 830 and an output apparatus 840 respectively in electric connection with the memory 800 and the processor 810, and the electric connection is preferably realized by a bus.

In the electronic device of the present embodiment, preferably, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

In the electronic device of the present embodiment, preferably, after displaying running interfaces corresponding to the multiple applications respectively in the multiple split screen display areas, the at least one processor is further caused to detect that the specified applications are not operated beyond a preset time, and then automatically hide running interfaces of specified applications of the multiple applications and run them in the background.

In the electronic device of the present embodiment, preferably, after displaying running interfaces corresponding to the multiple applications respectively in the multiple split screen display areas, the at least one processor is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

In the electronic device of the present embodiment, preferably, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

### Embodiment 4

The embodiments of the present disclosure also disclose a non-transitory computer-readable storage medium storing executable instructions that, when executed by an electronic device, cause the electronic device to detect a screen splitting; acquire the number of multiple applications currently running in the background according to the screen splitting operation; divide a screen into multiple split screen display areas according to the number of the multiple applications, wherein the number of the multiple split screen display areas is more than or equal to the number of the multiple applications; and display running interfaces corresponding to the multiple applications respectively in the multiple split screen display areas.

In the non-transitory computer-readable storage medium of the present embodiment, preferably, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

In the non-transitory computer-readable storage medium of the present embodiment, preferably, after displaying running interfaces corresponding to the multiple applications respectively in the multiple split screen display areas, the electronic device is further caused to detect that the specified applications are not operated beyond a preset time, and then automatically hide running interfaces of specified applications of the multiple applications and run them in the background.

In the non-transitory computer-readable storage medium of the present embodiment, preferably, after displaying running interfaces corresponding to the multiple applications respectively in the multiple split screen display areas, the electronic device is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

In the non-transitory computer-readable storage medium of the present embodiment, preferably, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

It should be appreciated by those skilled in the art that the embodiments of the present disclosure may be provided as methods, devices or computer program products. Therefore, the present disclosure may adopt the form of a complete hardware embodiment, a complete software embodiment or an embodiment of software and hardware in combination. Moreover, the present disclosure may adopt the form of a computer program product implemented on one or more computer-useable storage media (including but not limited to a magnetic disk memory, a CD-ROM, an optic memory, and the like) containing computer-usable program codes.

The present disclosure is described with reference to flow charts and/or block diagrams of the methods, devices (systems) and computer program products according to the embodiments of the present disclosure. It should be understood that each flow step and/or block in the flow charts and/or block diagrams as well as combination of flow steps and/or blocks in the flow charts and/or block diagrams may be implemented by computer program instructions. These computer program instructions may be loaded onto a general computer, a dedicated computer, an embedded processor or a processor of other programmable data processing devices to produce a machine, so that a device for achieving functions designated in one or more flow steps of the flow charts and/or in one or more blocks of the block diagrams is produced by means of the instructions executed by the computer or the processor of other programmable data processing devices.

These computer program instructions may also be stored in a computer-readable memory capable of guiding the computer or other programmable data processing devices to work in a specific mode, so as to produce a manufactured product comprising an instruction device by means of the instructions stored in the computer-readable memory, and the instruction device implements the functions designated in one or more flow steps of the flow charts and/or in one or more blocks of the block diagrams.

These computer program instructions may also be loaded onto a computer or other programmable data processing devices, so that a series of operation steps are executed on the computer or other programmable devices to produce processing implemented by the computer, and the instructions executed on the computer or other programmable data processing devices provide steps for implementing the functions designated in one or more flow steps of the flow charts and/or in one or more blocks of the block diagrams.

Apparently, the aforementioned embodiments are merely examples illustrated for clearly describing the present application, rather than limiting the implementation ways thereof. For those skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present application.

## Claims

1. A split screen display method, **characterized in** comprising:
detecting a screen splitting;
acquiring the number of multiple applications currently running in the background according to the screen splitting operation;
dividing a screen into multiple split screen display areas according to the number of the multiple applications, wherein the number of the multiple split screen display areas is more than or equal to the number of the multiple applications; and
displaying running interfaces corresponding to the multiple applications respectively in the multiple split screen display areas.

2. The method according to claim 1, **characterized in that** the displaying running interfaces corresponding to the multiple applications respectively in the multiple split screen display areas comprises:
acquiring the sequence that the multiple applications are selected respectively or the priority respectively corresponding to the multiple applications;
displaying running interfaces corresponding to the multiple applications respectively in the multiple split screen display areas in the sequence that the multiple applications are respectively selected or according to the priority respectively corresponding to the multiple applications.

3. The method according to claim 1, **characterized in that**, after displaying running interfaces corresponding to the multiple applications respectively in the multiple split screen display areas, the method further comprises:
automatically hiding running interfaces of specified applications of the multiple applications and running them in the background when detecting that the specified applications are not operated beyond a preset time.

4. The method according to claim 1, **characterized in that**, after displaying running interfaces corresponding to the multiple applications respectively in the multiple split screen display areas, the method further comprises:
receiving an instruction for exchanging a first split screen area and a second split screen area in the multiple split screen display areas; and
exchanging and displaying running interfaces corresponding to the applications respectively displayed in the first split screen area and the second split screen area according to the exchange instructions.

5. The method according to claim 4, **characterized in that** the receiving the instruction for exchanging the first split screen area and the second split screen area in the multiple split screen display areas comprises:
receiving a preset sliding operation of a user to a display interface of a mobile terminal; or
receiving a user's operation to a preset physical button of a mobile terminal.

6. A split screen display apparatus, **characterized in** comprising:
a first detecting module that detects a screen splitting;
an acquisition module that acquires the number of multiple applications currently running in the background according to the screen splitting operation;
a screen splitting module that divides a screen into multiple split screen display areas according to the number of the multiple applications, wherein the number of the multiple split screen display areas is more than or equal to the number of the multiple applications; and
a display module that displays running interfaces corresponding to the multiple applications respectively in the multiple split screen display areas.

7. The apparatus according to Claim 6, **characterized in that**, the display module comprises:
an acquisition unit that acquires the sequence that the multiple applications are selected respectively or the priority respectively corresponding to the multiple applications;
a display unit that displays running interfaces corresponding to the multiple applications respectively in the multiple split screen display areas in the sequence that the multiple applications are respectively selected or according to the priority respectively corresponding to the multiple applications.

8. The apparatus according to Claim 6, **characterized in** further comprising a second detecting module that, after displaying running interfaces corresponding to the multiple applications respectively in the multiple split screen display areas, detects that the specified applications are not operated beyond a preset time, and then automatically hides running interfaces of specified applications of the multiple applications and runs them in the background.

9. The apparatus according to Claim 6, **characterized in** further comprising:
a receiving module that receives an instruction for exchanging a first split screen area and a second split screen area in the multiple split screen display areas; and
an exchanging module that exchanges and displays running interfaces corresponding to the applications respectively displayed in the first split screen area and the second split screen area according to the exchange instructions.

10. The apparatus according to Claim 9, **characterized in that**, the receiving module receives a preset sliding operation of a user to a display interface of a mobile terminal; or receives a user's operation to a preset physical button of a mobile terminal.

11. An electronic device, comprising at least one processor; and a memory communicably connected with the at least one processor for storing instructions executable by the at least one processor, **characterized in that**, execution of the instructions by the at least one processor causes the at least one processor to:
detect a screen splitting;
acquire the number of multiple applications currently running in the background according to the screen splitting operation;
divide a screen into multiple split screen display areas according to the number of the multiple applications, wherein the number of the multiple split screen display areas is more than or equal to the number of the multiple applications; and
display running interfaces corresponding to the multiple applications respectively in the multiple split screen display areas.

12. The electronic device of Claim 11, **characterized in that**, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

13. The electronic device of Claim 11, **characterized in that**, after displaying running interfaces corresponding to the multiple applications respectively in the multiple split screen display areas, the at least one processor is further caused to detect that the specified applications are not operated beyond a preset time, and then automatically hide running interfaces of specified applications of the multiple applications and run them in the background.

14. The electronic device of Claim 11, **characterized in that**, after displaying running interfaces corresponding to the multiple applications respectively in the multiple split screen display areas, the at least one processor is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

15. The electronic device of Claim 14, **characterized in that**, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.

16. A non-transitory computer-readable storage medium storing executable instructions that, when executed by an electronic device, cause the electronic device to:
detect a screen splitting;
acquire the number of multiple applications currently running in the background according to the screen splitting operation;
divide a screen into multiple split screen display areas according to the number of the multiple applications, wherein the number of the multiple split screen display areas is more than or equal to the number of the multiple applications; and
display running interfaces corresponding to the multiple applications respectively in the multiple split screen display areas.

17. The non-transitory computer-readable storage medium of Claim 16, **characterized in that**, the displaying running interfaces corresponding to the multiple applications respectively in the multiple split screen display areas comprises: acquiring the sequence that the multiple applications are selected respectively or the priority respectively corresponding to the multiple applications; displaying running interfaces corresponding to the multiple applications respectively in the multiple split screen display areas in the sequence that the multiple applications are respectively selected or according to the priority respectively corresponding to the multiple applications.

18. The non-transitory computer-readable storage medium of Claim 16, **characterized in that**, after displaying running interfaces corresponding to the multiple applications respectively in the multiple split screen display areas, the electronic device is further caused to detect that the specified applications are not operated beyond a preset time, and then automatically hide running interfaces of specified applications of the multiple applications and run them in the background.

19. The non-transitory computer-readable storage medium of Claim 16, **characterized in that**, after displaying running interfaces corresponding to the multiple applications respectively in the multiple split screen display areas, the electronic device is further caused to receive an instruction for exchanging a first split screen area and a second split screen area in the multiple split screen display areas; exchange and display running interfaces corresponding to the applications respectively displayed in the first split screen area and the second split screen area according to the exchange instructions.

20. The non-transitory computer-readable storage medium of Claim 19, **characterized in that**, the receiving the instruction for exchanging the first split screen area and the second split screen area in the multiple split screen display areas comprises: receiving a preset sliding operation of a user to a display interface of a mobile terminal; or receiving a user's operation to a preset physical button of a mobile terminal.
